# FASCICULE DE BREVET EUROPEEN

(11) **EP 3 860 783 B1**
(45) Date de publication et mention de la délivrance du brevet: **07.12.2022**
(21) Numéro de dépôt: 19774120.0
(22) Date de dépôt: 01.10.2019
(51) Int. Cl.: B22F 3/10, B22F 3/12, B22F 3/105, B22F 5/00, B22F 10/10, B28B 1/00, B33Y 10/00, B33Y 80/00, B28B 7/34, C04B 35/111, C04B 35/486, B22F 3/14, B22F 3/15

(54) **PROCEDE DE REALISATION DE CONTRE-FORME ET PROCEDE DE FABRICATION DE PIECE DE FORME COMPLEXE UTILISANT UNE TELLE CONTRE-FORME**
VERFAHREN ZUR HERSTELLUNG EINER GEGENFORM UND VERFAHREN ZUR HERSTELLUNG EINES TEILS MIT EINER KOMPLEXEN FORM UNTER VERWENDUNG EINER SOLCHEN GEGENFORM
METHOD FOR PRODUCING A COUNTER-FORM AND METHOD FOR MANUFACTURING A PART HAVING A COMPLEX SHAPE USING SUCH A COUNTER-FORM

(30) Priorité: 02.10.2018 FR 1859120
(43) Date de publication de la demande: 11.08.2021
(73) Titulaire: NORIMAT, 31300 Toulouse Occitanie (FR)
(72) Inventeur: BEYNET, Yannick, 31000 TOULOUSE OCCITANIE (FR); EPHERRE, Romain, 31300 TOULOUSE OCCITANIE (FR)
(74) Mandataire: Junca, Eric
(86) Numéro de dépôt international: PCT/EP2019/076605
(87) Numéro de publication internationale: WO 2020/070133

(56) Documents cités:
- EP-A1- 2 551 040
- WO-A1-2016/030654
- US-A1- 2016 144 432
- US-A1- 2017 291 221
- US-A1- 2017 361 490
- US-A1- 2017 368 780

## Description

### DOMAINE TECHNIQUE

L'invention se rapporte à un procédé de réalisation de contre-forme destinée à la fabrication de pièces de formes complexes, ainsi qu'à un procédé de fabrication de pièce de forme complexe par frittage sous pression à partir d'une telle contre-forme.

L'invention concerne le domaine de la fabrication de pièces, en particulier de pièces mécaniques industrielles, par densification de matériaux poreux ou pulvérulents. Ce domaine recouvre différentes techniques de densification par frittage sous charge isostatique, uni ou multiaxial, par exemple le pressage à chaud, notamment isostatique, le frittage flash à haute pression dit « SPS » (acronyme de « Spark Plasma Sintering » en terminologie anglaise), ou le frittage sélectif par rayonnement laser.

Plus particulièrement la technique de frittage SPS consiste à consolider un volume de poudres de céramiques, de polymères ou métalliques dans un moule conducteur pour l'obtention rapide de matériaux denses à microstructure fine. Cette consolidation est réalisée par l'application simultanée d'une charge (sous une forte pression uni-axiale exercée sur le moule, par exemple de l'ordre de 100 MPa) et d'un chauffage, de l'ordre de 500°C à 2000°C, fourni par un courant continu crénelé de grande intensité dans le moule (par exemple de l'ordre de 500 à 10000A) le frittage complet des poudres étant alors obtenu en seulement quelques minutes.

L'avantage essentiel de cette technique de frittage SPS réside dans le fait que, étant donné la vitesse de montée en température élevée et les durées de séjour à haute température relativement courtes, la densification du matériau ne s'accompagne pas, ou très peu, d'une croissance cristalline.

### ÉTAT DE LA TECHNIQUE

La pression uni-axiale exercée par la technique de frittage SPS présente l'inconvénient de provoquer une hétérogénéité de densification, en particulier pour des pièces de formes complexes ayant des épaisseurs fortement différenciées induisant un retrait de matière non uniforme, dans le temps et dans l'espace restreint, entre les zones d'épaisseurs différentes. De manière générale, une forme complexe se rapporte à une forme à courbure variable avec ou sans variation d'épaisseur, ou à forte variation d'épaisseur avec ou sans variation de courbure, et/ou à rupture géométrique.

Afin de remédier à cet inconvénient d'inhomogénéité de densification, le document de brevet FR 3 042 992 prévoit d'ajouter une couche d'interface déformable entre la matière pulvérulente (ou poreuse) et la face de contre-forme du moule adaptée pour réaliser la pièce.

Cependant, les techniques de frittage présentent également un problème lié à l'utilisation de moule ou de contre-formes de moule qui ne permettent pas de réaliser un démoulage aisé lorsque la pièce présente une forme complexe, formant en particulier des contre-dépouilles difficilement accessibles et donc des dépouilles difficilement démoulables sans détruire partiellement la pièce.

Les contre-formes peuvent être des empreintes obtenues par pressage d'un lit de poudre céramique agglomérée par un liant ou par liantage de poudre céramique sur une préforme polymère, la contre-forme étant recouverte d'une interface inerte. Et ces techniques présentent de fortes limitations au regard des géométries accessibles, dues aux problèmes de contre-dépouilles des formes complexes, et de l'état de surface de ces contre-formes qui nécessite un recouvrement par une interface.

Pour réaliser des contre-formes compatibles avec des dépouilles démoulables, il convient alors de multiplier le nombre de contre-formes afin d'éviter les problèmes de démoulage. Il est alors nécessaire de fabriquer les outils adaptés à chaque contre-forme, entraînant des étapes supplémentaires de conception et d'usinage. L'assemblage de ces nombreuses contre-formes est également source de défauts (géométrie non ajustée de la pièce finale, amorces de fissures, perte de matière, etc.).

Il est par ailleurs connu du document US 2017/291221 l'utilisation d'un récipient à paroi mince réalisé par une impression additive selon la forme de la pièce à fabriquer. Le conteneur est intégré dans une presse de technologie HIP (acronyme de « Hot Isostate Pressing », c'est-à-dire à pression isostatique à chaud) pour densifier le métal en poudre. Le document US 2017/368780 utilise une impression additive de plusieurs matériaux dans une presse HIP pour conférer des propriétés particulières à la pièce selon la direction.

Dans le document EP 2 551 040 encore relatif à la technologie HIP, le matériau du récipient, préalablement réalisé en couches additives, est le même que celui du composant à fabriquer. D'autres documents, US 2017/361490, US 2016/144432 ou WO 2016/030654 utilisent des phases supplémentaires pour mettre en œuvre la technologie HIP : une phase de gélification, ou l'utilisation de moules en céramique réalisés préalablement par un procédé à cire dans une technologie HIP.

Cependant, ces documents mettent en œuvre une technologie HIP, technologie qui génère l'utilisation de moyens surdimensionnés, complexes et chronophages.

### EXPOSÉ DE L'INVENTION

L'invention vise à s'affranchir de cette problématique, en particulier elle vise à éviter l'élaboration d'un outillage spécialisé pour la réalisation de la contre-forme et à faciliter l'assemblage des parties de contre-forme, tout en maîtrisant l'état de surface des contre-formes. Pour ce faire, l'invention prévoit notamment d'utiliser une contre-forme de structure issue d'une technique additive à commande numérique et de dimensionner la contre-forme pour anticiper une contraction de la matière à densifier selon l'axe de la pression exercée.

Plus précisément, la présente invention a pour objet un procédé de réalisation d'une contre-forme de fabrication de pièce de forme complexe par densification par frittage sous pression, selon la revendication 1. Dans ce procédé, la contre-forme est formée de couches successives déposées par une impression additive en trois dimensions (3D) pilotée numériquement selon les étapes suivantes:
- enregistrer numériquement un négatif en trois dimensions de la pièce à réaliser dans une unité de commande d'un système d'impression additive en trois dimensions afin de constituer une empreinte de la contre-forme à réaliser, le reste de la contre-forme présentant des faces de conformation adaptée à un moule de fabrication de la pièce ;
- réaliser la contre-forme par une technique d'impression additive 3D, la dimension de la contre-forme étant augmentée d'un facteur d'étirement de masse volumique compensant un retrait de dimension de la pièce à fabriquer (1; 24d) dans le sens de la pression uni-axiale appliquée lors de la densification par frittage de la pièce à fabriquer ; et
- compléter l'impression additive de la contre-forme (20 ; 30a, 30b) par un frittage.

En particulier la combinaison des caractéristiques de dimension de contre-forme augmentée et de frittage préalable permet d'assurer une adaptation - par adaptation lors des frittages de la contre-forme et ultérieurement de la matière de la pièce à fabriquer, ce qui induit une application rigoureuse du taux de densification ciblé pour cette matière, et se traduit par l'obtention de caractéristiques physico-chimiques - avec l'obtention d'une homogénéité de porosité supérieure et du taux de porosité prédéterminé de la pièce à fabriquer - et de caractéristiques géométriques (dimensions et configuration) précisément atteintes.

Selon des modes de mises en œuvre avantageux :
- la technique d'impression additive 3D est choisie entre la stéréolithographie, la projection de liant (« binder jetting » en terminologie anglaise), l'extrusion pilotée, la fusion de filaments, l'impression jet d'encre et le jet d'aérosol;
- le matériau poreux utilisé pour réaliser la contre-forme est choisi entre une céramique, une silice, un silicate métallique, et un matériau composite ;
- l'impression est effectuée avec une épaisseur de parois de la contre-forme inférieure ou égale à cinq millimètres, afin d'éviter toute fissuration lors des frittages ultérieurs de la pièce ;
- ladite contre-forme est, dans une étape ultérieure, partagée en au moins deux parties assemblées selon au moins un plan de joint de sorte à éliminer au moins une contre-dépouille, le plan de joint entre les parties séparant la forme complexe en parties directement démoulables.

Une étape de déliantage de la contre-forme peut être avantageusement effectuée en sortie d'impression additive 3D par un traitement thermique à des températures comprises entre 200 et 600°C et des vitesses de montée en température comprises entre 0,1 et 1°C/min, suivant le matériau de la contre-forme. Cette étape permet d'éliminer les composés organiques introduits dans le matériau pendant la réalisation de la contre-forme.

De plus, l'étape de déliantage peut être suivie d'une étape de pré-frittage qui consiste à traiter thermiquement la contre-forme à des températures supérieures, entre 600 et 1500°C suivant le matériau de la contre-forme, cette étape permettant de débuter la densification de la contre-forme en lui donnant une tenue mécanique et favorisant l'application de l'interface.

L'invention a également pour objet un procédé de fabrication d'une pièce de forme complexe par frittage sous pression utilisant une contre-forme réalisée par le procédé tel que défini ci-dessus, le procédé de fabrication de pièce se déroulant selon les étapes suivantes :
- réunir les parties de contre-forme dans un moule de densification pour le frittage sous pression;
- introduire une matière pulvérulente à densifier dans au moins un conduit traversant une partie de contre-forme;
- densifier par frittage sous pression uni-axiale ladite matière à densifier; et
- séparer les parties de contre-forme pour libérer la pièce ainsi fabriquée.

Le matériau poreux ou pulvérulent de la pièce à fabriquer peut être choisi entre une céramique, un alliage métallique, un polymère et un matériau composite. En outre, l'une au moins des parois externes de partie de contre-forme peut être évidée puis remplie de poudre de céramique de température de frittage équivalente à la céramique de la partie de contre-forme.

Selon des caractéristiques préférées :
- le matériau de contre-forme est choisi de sorte que les matériaux de contre-forme et de la pièce à fabriquer présentent un même comportement au frittage, ce comportement identique est induit par le frittage préalable des matériaux de contre-forme;
- la température du début de frittage, respectivement de fin de frittage, d'une céramique de contre-forme est supérieure ou égale, respectivement supérieure, à celle de la pièce à fabriquer;
- la céramique peut être choisie entre de la poudre d'YSZ (de la zircone dite « yttriée », c'est-à-dire stabilisée par l'oxyde d'yttrium), d'ATZ (de la zircone renforcée par de l'alumine), de ZTA (de l'alumine renforcée par de la zircone) et d'alumine présentant des taux de densification pouvant aller de 40 à 80%;
- au moins un conduit débouchant est prévu hors de la contre-forme, afin de remplir la contre-forme d'une matière pulvérulente ou poreuse destinée à constituer la pièce, et d'éliminer l'éventuelle poudre en excès;
- l'impression additive de la contre-forme est complétée par un frittage de la contre-forme, ce frittage pouvant être appliqué en même temps que le frittage de la pièce à fabriquer.

Selon un mode de réalisation avantageux, il est prévu d'agencer une couche de matériau poreux et/ou pulvérulent en interface entre la contre-forme et la matière à densifier. Cette interface de séparation permet d'éviter toute interaction entre la contre-forme et la poudre de la pièce à obtenir.

Avantageusement, l'interface est constituée par au moins une couche de matériau choisi entre du graphite, un oxyde d'Yttrium et du nitrure de bore. La couche d'interface peut être appliquée sous une forme choisie entre une pulvérisation, un dépôt de poudre et une feuille de forme adaptée.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1a, un exemple de pièce de forme complexe à réaliser selon le procédé de l'invention;
- la figure 1b, un modèle numérique d'un négatif en trois dimensions de la pièce à réaliser de la figure 1a ;
- la figure 2, des vues schématiques en coupe des étapes essentielles 2a à 2e du procédé de fabrication d'une pièce de forme complexe selon l'invention par frittage utilisant une contre-forme réalisée par le procédé selon l'invention;
- les figures 3a à 3c, des vues de deux contre-formes réalisées dans le cadre de la fabrication de pièce des figures 1a et 1b, ainsi qu'une vue de ces deux contre-formes réunies dans un moule de densification par frittage sous pression SPS (figure 3c), et
- la figure 4, une vue en perspective de la pièce fabriquée.

Sur les figures, des éléments identiques sont repérés par un même signe de référence qui renvoie au(x) passage(s) de la description qui le mentionne(nt).

### DESCRIPTION DÉTAILLÉE

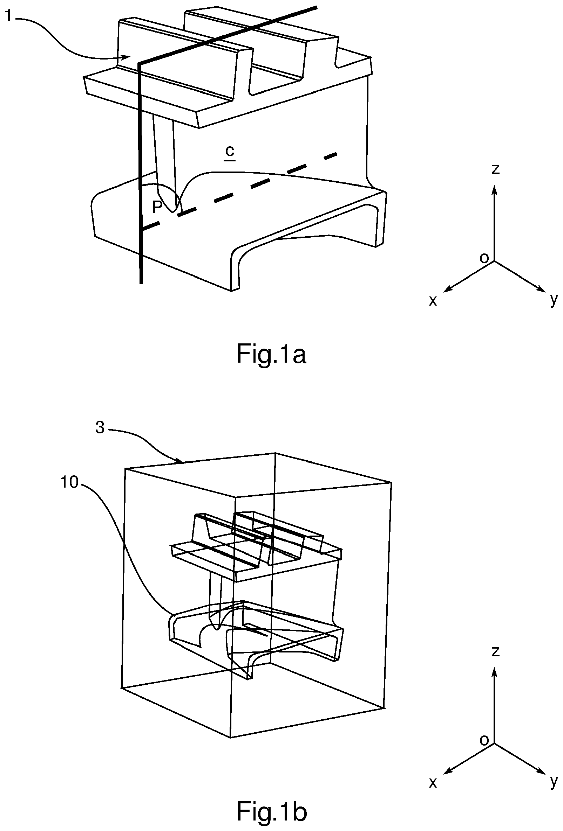

En référence à la figure 1a, est présenté un exemple de pièce 1 de forme complexe à réaliser selon le procédé de fabrication de l'invention. Le plan « P » - parallèle au plan de référence XOZ) est le plan de joint de deux contre-formes à réaliser préalablement (comme cela sera expliqué ci-après) pour permettre un démoulage aisé de la pièce une fois réalisée: en effet, la pièce 1 présente en particulier un creux « C » formant une contre-dépouille, qui rend difficile le démoulage. Selon l'invention, le creux « C » se trouve alors entièrement du côté d'une seule contre-forme.

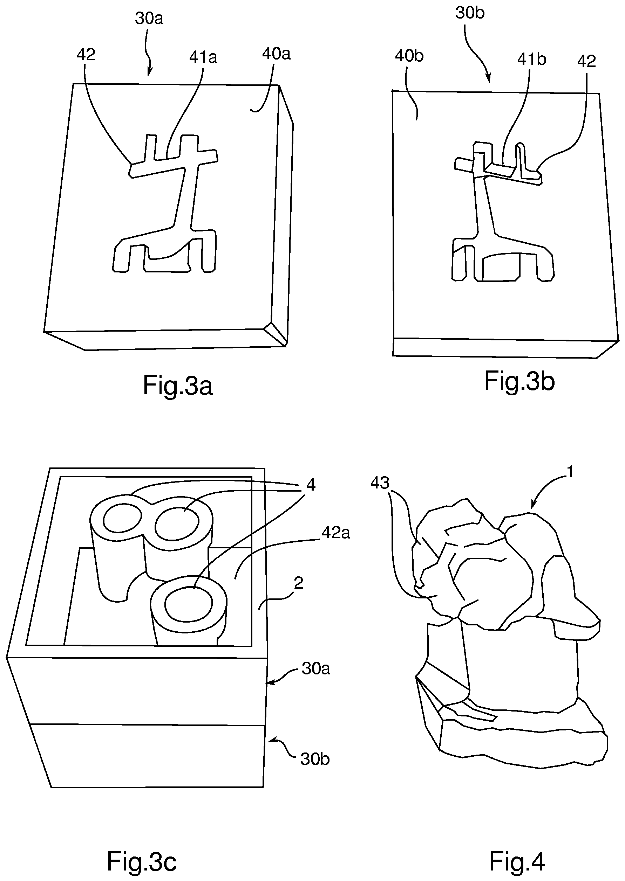

La figure 1b montre un modèle numérique 3 du négatif 10 en trois dimensions de la pièce 1 de la figure 1a. Ce modèle numérique 3 est réalisé dans une unité de commande d'un système d'impression additive en trois dimensions (non représentée), afin de constituer la forme positive des parties de la contre-forme à réaliser. Pour un démoulage facile, cette forme positive est partagée en deux parties, comme le présente la figure 1a. L'étape ultérieure est la réalisation de chaque partie de contre-forme par une technique d'impression additive 3D, la stéréolithographie dans l'exemple, le résultat étant présenté en référence à la figure 3 avec les deux parties de contre-forme 30a et 30b.

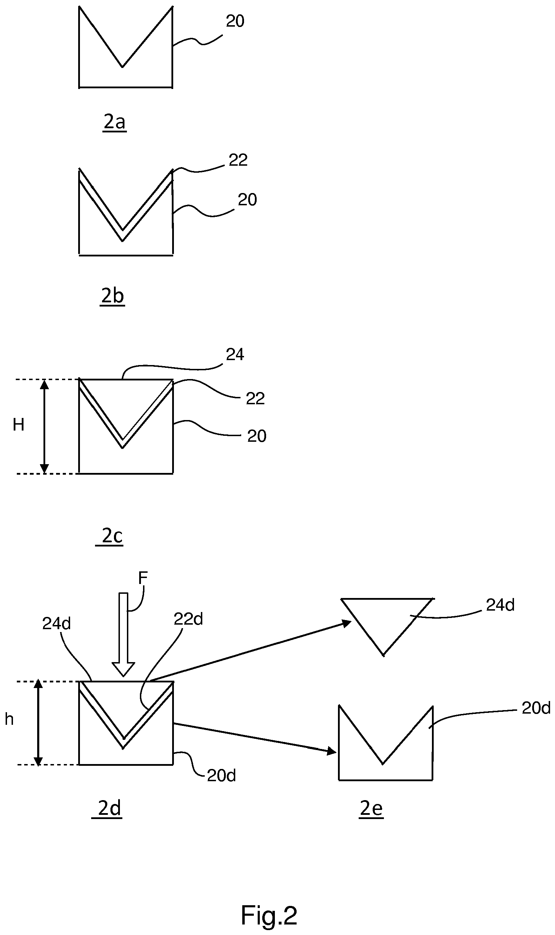

La figure 2 présente des vues schématiques en coupe des moyens mis en œuvre dans des étapes essentielles 2a à 2e du procédé de fabrication selon l'invention d'une pièce de forme complexe 24d par frittage sous pression uni-axiale, ce procédé utilisant une contre-forme 20 réalisée (étape 2a) selon l'invention par une technique d'impression additive 3D, la stéréolithographie dans l'exemple, à partir de poudre de céramique liantée.

Dans le cas illustré, une seule contre-forme en dièdre suffit pour un démoulage aisé de la pièce prismatique 24d (cf. étape 2e) de forme considérée comme complexe dans cet exemple simplifié. Une couche d'interface 22 de graphite d'épaisseur constante est alors déposée sur la contre-forme 20 (étape 2b) par pulvérisation, puis la matière à densifier 24 est ajoutée sur cette interface 22 (étape 2c). Cette interface 22 sert à éviter une interaction entre la contre-forme 20 et la poudre 24 de la pièce à fabriquer.

Les matériaux à densifier utilisés dans l'exemple pour fabriquer la pièce sont des alliages métalliques, un alliage de TiAl (titane et aluminium) et un super-alliage à base de nickel de la famille des Renés.

Avantageusement, le matériau de la contre-forme 20 est choisi pour que les matériaux de contre-forme et de la pièce à fabriquer 24 présentent un comportement au frittage similaire, en termes de températures de début et de fin de frittage ainsi que de taux de densification.

Dans le cas des alliages utilisés pour la pièce à fabriquer, la céramique utilisée pour la contre-forme est alors de l'ATZ (de la zircone renforcée par de l'alumine) pour une pièce en TiAl, et de l'YSZ (de la zircone yttriée) pour le superalliage à base de nickel choisi dans la famille des Renés. Plus généralement, la température du début de frittage (respectivement de fin de frittage) de la céramique utilisée pour la contre-forme est supérieure ou égale (respectivement supérieure) à celle de l'alliage de métal de la pièce à fabriquer.

Un frittage sous pression uni-axiale SPS de la matière à densifier 24 densifie également la contre-forme 20 dans cet exemple (prévoir -10% à - 45% de retrait), la matière 24 et la contre-forme 20 étant introduites dans un moule SPS (non représenté).

En prévision de cette densification, la dimension de chaque partie de contre-forme 20 est augmentée pour anticiper le retrait de la pièce 24 dans la direction de frittage SPS selon la pression uni-axiale « F » exercée (étape 2d). La géométrie de la pièce 24 est ainsi préalablement « étirée » d'un facteur d'étirement « Fe » afin de compenser ce retrait de dimension de pièce. Le facteur Fe est défini par le rapport la masse volumique de la poudre à densifier rapportée à la masse volumique de la poudre densifiée. Avantageusement, la géométrie simplifiée des parties de contre-forme 20 peut facilement évoluer dans le cas d'un changement de valeur du facteur Fe.

Ainsi, dans cet exemple de réalisation, la pression uni-axiale « F » provoque une diminution de hauteur maximale de la contre-forme 20 de 40%, cette hauteur passant d'une valeur « H » (étape 2c) à une valeur « h » (étape 2d). Cette diminution de hauteur permet de fabriquer la pièce 24d selon la hauteur prévue, la hauteur initiale « H » ayant été augmentée par l'application du coefficient Fe. La contre-forme et la pièce condensées, référencées 20d et 24d, sont alors aisément séparées (étape 2e).

Les vues des figures 3a et 3b présentent une contre-forme en céramique ATZ sous forme de parties 30a et 30b, dans le cadre de l'exemple de fabrication de la pièce 1 en TiAl selon les figures 1a et 1b, la céramique ATZ et l'alliage TiAl présentant des comportements similaires au frittage. Ces parties de contre-forme 30a et 30b présentent des faces de jonction 40a et 40b dans le plan de joint « P » (cf. figure 1a).

Avantageusement, un déliantage des parties de contre-forme 30a, 30b est mise en œuvre par un traitement thermique à des températures comprises entre 200 et 600°C, 400°C dans l'exemple, avec une vitesse de montée en température comprises entre 0,1 et 1°C/min, 0,5°C/min dans l'exemple. Cette étape permet d'éliminer les composés organiques qui peuvent s'introduire dans la_poudre de céramique pendant l'impression 3D de réalisation des parties de contre-forme.

De préférence, un pré-frittage est également réalisé après le déliantage. Ce pré-frittage consiste à traiter les parties de contre-forme déliantées 30a, 30b à des températures encore plus élevées, par exemple entre 600°C à 1500°C suivant les matériaux utilisés, à 1200°C dans l'exemple. Ce traitement thermique permet de commencer la densification des parties de contre-forme pour leur donner une tenue mécanique et faciliter ainsi l'application de couche(s) d'interface, comme décrit ci-dessous.

Les deux demi-empreintes 41a et 41b de la pièce à fabriquer sont recouvertes de graphite 42 par pulvérisation, puis d'une couche à base d'oxyde d'yttrium pour éviter la réaction entre la céramique et le matériau de la pièce à fabriquer, du TiAl dans l'exemple. Pour la réalisation de contre-forme par stéréolithographie, la contre-forme divisée en deux parties permet d'éliminer la pâte non polymérisée. De plus, les parties de contre-forme 30a, 30b ont avantageusement une épaisseur maximale de 5 mm afin d'éviter tout risque de fissuration lors du frittage et du traitement thermique de déliantage lors de la récupération de la pièce.

En référence à la figure 3c, les deux parties de contre-forme 30a, 30b sont assemblées dans un moule 2 de frittage SPS de sorte que les deux demi-empreintes 41a, 41b forment une seule empreinte correspondant, en négatif, à la pièce à fabriquer. Le remplissage de cette empreinte par de la poudre de TiAl se fait par les trois conduits creux 4. Ces conduits 4 traversent la face 42a opposée à la face de joint 40a de la partie de contre-forme 30a (cf. figure 3a). Les conduits 4 permettent également d'évacuer le cas échéant la poudre de TiAl en excès.

Les parois externes d'une ou des parties de contre-forme 30a, 30b peuvent être avantageusement évidées, afin de faciliter leur réalisation par impression 3D. Ces espaces évidés sont alors remplis de poudre d'YSZ (zircone yttriée) qui a une température de frittage équivalente à celle de la céramique de contre-forme ATZ utilisée.

Lors du frittage sous pression uni-axiale SPS, la céramique et l'alliage métallique de la pièce à fabriquer vont fritter simultanément, la céramique frittée venant recouvrir la pièce métallique. Grâce aux couches d'interfaces de graphite et d'oxyde d'Yttrium 42 (cf. figures 3a et 3b), la céramique est séparée aisément de la pièce par décrochage mécanique et/ou chimique. La figure 4 illustre la pièce finale 1 obtenue avec quelques résidus de céramique 43 encore à retirer.

L'invention n'est pas limitée aux exemples de réalisation décrits et représentés. Ainsi, la contre-forme peut être divisée en un nombre de parties minimal pour éviter les contre-dépouilles de la pièce à fabriquer.

Par ailleurs, la contre-forme peut être structurée avec des zones de faiblesse localisées sans restriction d'emplacement, afin de faciliter le démoulage final.

En outre, la pièce à fabriquer peut être constituée par une poudre d'alliage métallique, une céramique, un matériau composite ou tout type de matériau approprié.

## Revendications

1. Procédé de réalisation d'une contre-forme (20, 30a, 30b) de fabrication de pièce de forme complexe (1; 24d) par densification par frittage sous pression, **caractérisé en ce que** la contre-forme (20; 30a, 30b) est formée de couches successives réalisées par une impression additive en trois dimensions (3D) pilotée numériquement selon les étapes suivantes :
- enregistrer numériquement un négatif (3) en trois dimensions de la pièce à réaliser (1; 24d) dans une unité de commande d'un système d'impression additive en trois dimensions afin de constituer une empreinte de la contre-forme (20; 30, 30b) à réaliser, le reste de la contre-forme présentant des faces de conformation adaptée à un moule de fabrication de la pièce (1; 24d);
- réaliser la contre-forme (30a, 30b) par une technique d'impression additive 3D, la dimension de la contre-forme (20; 30a, 30b) étant augmentée d'un facteur d'étirement de masse volumique compensant un retrait de dimension de la pièce à fabriquer (1; 24d) dans le sens de la pression uni-axiale (F) appliquée lors de la densification par frittage de la pièce à fabriquer ; et
- compléter l'impression additive de la contre-forme (20 ; 30a, 30b) par un frittage.

2. Procédé de réalisation d'une contre-forme selon la revendication 1, dans lequel la technique d'impression additive 3D est choisie entre la stéréolithographie, la projection de liant, l'extrusion pilotée, la fusion de filaments, l'impression jet d'encre, et le jet d'aérosol.

3. Procédé de réalisation d'une contre-forme selon l'une quelconque des revendications 1 ou 2, dans lequel la contre-forme (20; 30a, 30b) est réalisée en un matériau poreux choisi entre une céramique, une silice, un silicate métallique, et un matériau composite.

4. Procédé de réalisation d'une contre-forme selon l'une quelconque des revendications précédentes, dans lequel l'impression est effectuée avec une épaisseur de parois de la contre-forme (20; 30a, 30b) inférieure ou égale à cinq millimètres.

5. Procédé de réalisation d'une contre-forme (20, 30a, 30b) selon l'une quelconque des revendications précédentes, **caractérisé en ce qu'**une étape de déliantage de contre-forme (30a, 30b) est effectuée en sortie d'impression additive 3D par un traitement thermique à une température comprise entre 200 et 600°C et des vitesses de montée en température comprises entre 0, 1 et 1°C/min.

6. Procédé de réalisation selon la revendication précédente, **caractérisé en ce que** l'étape de déliantage est suivie d'une étape de pré-frittage par traitement thermique de la contre-forme (3a, 30b) à une température comprise entre 600 et 1500°C.

7. Procédé de réalisation d'une contre-forme selon l'une quelconque des revendications précédentes, dans lequel ladite contre-forme est, dans une étape ultérieure, partagée en au moins deux parties (30a, 30b) assemblées selon au moins un plan de joint (P) de sorte à éliminer au moins une contre-dépouille, le plan de joint (P) entre les parties (30a, 30b) séparant la forme complexe en parties (30a, 30b) directement démoulables.

8. Procédé de fabrication d'une pièce de forme complexe (1; 24d) par frittage utilisant une contre-forme (20; 30a, 30b) réalisée par le procédé tel que défini selon la revendication précédente, **caractérisé en ce qu'**il se déroule selon les étapes suivantes :
- réunir les parties de contre-forme (20, 30a, 30b) dans un moule de densification pour le frittage sous pression uni-axiale;
- introduire une matière pulvérulente ou poreuse à densifier dans au moins un conduit (4) traversant une partie de contre-forme (30a) ;
- densifier la matière pulvérulente ou poreuse pour frittage sous pression uni-axiale (F); et
- séparer les parties de contre-forme (30a, 30b) pour libérer la pièce (1; 24d) ainsi fabriquée.

9. Procédé de fabrication selon l'une quelconque des revendications précédentes, dans lequel la contre-forme (20; 30a, 30b) est réalisée en un matériau poreux choisi de sorte que les matériaux de contre-forme (20; 30a, 30b) et de la pièce à fabriquer (1; 24d) présentent un même comportement au frittage.

10. Procédé de fabrication selon la revendication 8, dans lequel la température du début de frittage, respectivement de fin de frittage, d'une céramique de contre-forme (20; 30a, 30b) est supérieure ou égale, respectivement supérieure, à celle de la pièce à fabriquer (1; 24d).

11. Procédé de fabrication selon la revendication précédente, dans lequel la céramique est choisie entre de la poudre d'YSZ, d'ATZ, de ZTA et d'alumine présentant des taux de densification pouvant aller de 40 à 80%.

12. Procédé de fabrication selon l'une quelconque des revendications 8 à 11, dans lequel au moins un conduit débouchant (4) de remplissage par une matière pulvérulente ou poreuse destinée à constituer la pièce (1; 24d) est prévu hors de la contre-forme (20; 30a, 30b).

13. Procédé de fabrication selon l'une quelconque des revendications 8 à 12, dans lequel le frittage de la contre-forme (20; 30a, 30b) est appliqué en même temps que le frittage de la pièce à fabriquer (1; 24d).

14. Procédé de fabrication selon l'une quelconque des revendications 8 à 13 dans lequel la matière poreuse ou pulvérulente de la pièce à fabriquer (1; 24d) est choisie entre une céramique, un alliage métallique, un polymère et un matériau composite.

15. Procédé de fabrication selon la revendication précédente, dans lequel l'une au moins des parois externes de partie de contre-forme (30a, 30b) est évidée puis remplie de poudre de céramique de température de frittage égale à celle de la céramique de la partie de contre-forme (30a, 30b).

16. Procédé de fabrication selon l'une quelconque des revendications 8 à 15, dans lequel une interface de matériau poreux ou pulvérulent (22; 42) est agencée entre la contre-forme (20; 30a, 30b) et la matière à densifier (24).

17. Procédé de fabrication selon la revendication précédente, dans lequel l'interface (22; 42) est constituée par au moins une couche de matériau choisi entre du graphite, un oxyde d'yttrium et du nitrure de bore.

18. Procédé de fabrication selon la revendication précédente, dans lequel la couche d'interface (22; 42) est appliquée sous une forme choisie entre une pulvérisation, un dépôt de poudre et une feuille de forme adaptée.

## Patentansprüche

1. Verfahren zur Herstellung einer Gegenform (20, 30a, 30b) zur Fertigung eines Teils von komplexer Form (1; 24d) durch Verdichtung durch Drucksintern, **dadurch gekennzeichnet, dass** die Gegenform (20; 30a, 30b) aus aufeinanderfolgenden Schichten gebildet ist, die durch ein digital gesteuertes dreidimensionales (3D) additives Drucken gemäß den folgenden Schritten hergestellt werden:
- digitales Speichern eines dreidimensionalen Negativs (3) des herzustellenden Teils (1; 24d) in einer Steuerungseinheit eines Systems zum dreidimensionalen additiven Drucken, um ein Formnest der herzustellenden Gegenform (20; 30, 30b) zu bilden, wobei der Rest der Gegenform Formgebungsflächen aufweist, die für ein Formwerkzeug zur Fertigung des Teils (1; 24d) geeignet sind;
- Herstellen der Gegenform (30a, 30b) mit einer additiven 3D-Druck-Technik, wobei die Größe der Gegenform (20; 30a, 30b) um einen Volumenmassenstreckfaktor vergrößert ist, der einen Größenschwund des zu fertigenden Teils (1; 24d) in Richtung des uniaxialen Drucks (F) kompensiert, der bei der Verdichtung durch Sintern des zu fertigenden Teils ausgeübt wird; und
- Ergänzen des additiven Druckens der Gegenform (20; 30a, 30b) durch ein Sintern.

2. Verfahren zur Herstellung einer Gegenform nach Anspruch 1, bei dem die additive 3D-Druck-Technik unter Stereolithografie, Binder Jetting, gesteuerter Extrusion, Fused Filament, Tintenstrahldruck und Aerosol Jet gewählt ist.

3. Verfahren zur Herstellung einer Gegenform nach einem der Ansprüche 1 oder 2, bei dem die Gegenform (20; 30a, 30b) aus einem porösen Werkstoff hergestellt ist, der unter Keramik, Siliciumdioxid, einem Metallsilikat und einem Verbundwerkstoff gewählt ist.

4. Verfahren zur Herstellung einer Gegenform nach einem der vorhergehenden Ansprüche, bei dem das Drucken mit einer Wanddicke der Gegenform (20; 30a, 30b) kleiner oder gleich fünf Millimeter durchgeführt wird.

5. Verfahren zur Herstellung einer Gegenform (20, 30a, 30b) nach einem der vorhergehenden Ansprüche, **dadurch gekennzeichnet, dass** ein Schritt des Entbinderns der Gegenform (30a, 30b) am Ausgang des additiven 3D-Drucks durch eine Wärmebehandlung bei einer Temperatur zwischen 200 und 600 °C und Temperaturanstiegsgeschwindigkeiten zwischen 0,1 und 1 °C/min durchgeführt wird.

6. Herstellungsverfahren nach dem vorhergehenden Anspruch, **dadurch gekennzeichnet, dass** auf den Schritt des Entbinderns ein Schritt des Vorsinterns durch Wärmebehandlung der Gegenform (3a, 30b) bei einer Temperatur zwischen 600 und 1500 °C folgt.

7. Verfahren zur Herstellung einer Gegenform nach einem der vorhergehenden Ansprüche, bei dem die Gegenform, in einem weiteren Schritt, in mindestens zwei Teile (30a, 30b) geteilt wird, die entlang mindestens einer Teilungsebene (P) zusammengefügt sind, so dass mindestens eine Gegenhinterschneidung beseitigt wird, wobei die Teilungsebene (P) zwischen den Teilen (30a, 30b) die komplexe Form in direkt entformbare Teile (30a, 30b) trennt.

8. Verfahren zur Fertigung eines Teils von komplexer Form (1; 24d) durch Sintern unter Verwendung einer Gegenform (20; 30a, 30b), die mit dem nach dem vorhergehenden Anspruch definierten Verfahren hergestellt wird, **dadurch gekennzeichnet, dass** es nach den folgenden Schritten abläuft:
- Zusammenführen der Gegenformteile (20, 30a, 30b) in einem Verdichtungsformwerkzeug zum Sintern unter uniaxialem Druck;
- Einführen eines zu verdichtenden pulverförmigen oder porösen Stoffs in mindestens eine Leitung (4), die einen Gegenformteil (30a) durchquert;
- Verdichten des pulverförmigen oder porösen Stoffs zum Sintern unter uniaxialem Druck (F); und
- Trennen der Gegenformteile (30a, 30b) zum Freigeben des so gefertigten Teils (1; 24d).

9. Fertigungsverfahren nach einem der vorhergehenden Ansprüche, bei dem die Gegenform (20; 30a, 30b) aus einem porösen Werkstoff hergestellt ist, der so gewählt ist, dass die Werkstoffe der Gegenform (20; 30a, 30b) und des zu fertigenden Teils (1; 24d) beim Sintern das gleiche Verhalten aufweisen.

10. Fertigungsverfahren nach Anspruch 8, bei dem die Temperatur des Sinterbeginns beziehungsweise des Sinterendes einer Keramik der Gegenform (20; 30a, 30b) größer oder gleich beziehungsweise größer als die des zu fertigenden Teils (1; 24d) ist.

11. Fertigungsverfahren nach dem vorhergehenden Anspruch, bei dem die Keramik unter YSZ-, ATZ-, ZTA- und Aluminiumoxidpulver gewählt ist, das Verdichtungsraten aufweist, die von 40 bis 80 % reichen können.

12. Fertigungsverfahren nach einem der Ansprüche 8 bis 11, bei dem mindestens ein mündender Kanal (4) zum Füllen mit einem pulverförmigen oder porösen Material, das zur Bildung des Teils (1; 24d) bestimmt ist, außerhalb der Gegenform (20; 30a, 30b) vorgesehen ist.

13. Fertigungsverfahren nach einem der Ansprüche 8 bis 12, bei dem das Sintern der Gegenform (20; 30a, 30b) gleichzeitig mit dem Sintern des zu fertigenden Teils (1; 24d) angewandt wird.

14. Fertigungsverfahren nach einem der Ansprüche 8 bis 13, bei dem das poröse oder pulverförmige Material des zu fertigenden Teils (1; 24d) unter einer Keramik, einer Metalllegierung, einem Polymer und einem Verbundwerkstoff gewählt ist.

15. Fertigungsverfahren nach dem vorhergehenden Anspruch, bei dem mindestens eine der Außenwände des Gegenformteils (30a, 30b) ausgehöhlt und dann mit Keramikpulver mit einer Sintertemperatur gleich derjenigen der Keramik des Gegenformteils (30a, 30b) gefüllt wird.

16. Fertigungsverfahren nach einem der Ansprüche 8 bis 15, bei dem eine Schnittstelle aus porösem oder pulverförmigem Werkstoff (22; 42) zwischen der Gegenform (20; 30a, 30b) und dem zu verdichtenden Material (24) angeordnet wird.

17. Fertigungsverfahren nach dem vorhergehenden Anspruch, bei dem die Schnittstelle (22; 42) aus mindestens einer Schicht eines Werkstoffs besteht, der unter Graphit, Yttriumoxid und Bornitrid gewählt ist.

18. Fertigungsverfahren nach dem vorhergehenden Anspruch, bei dem die Schnittstellenschicht (22; 42) in einer Form appliziert wird, die zwischen einem Sprühen, einem Pulverauftrag und einer Folie von geeigneter Form gewählt ist.

## Claims

1. A method for producing a counterform (20, 30a, 30b) for manufacturing a part of complex shape (1; 24d) by means of pressure sintering densification, **characterized in that** the counterform (20; 30a, 30b) is formed of successive layers produced by means of digitally controlled three-dimensional (3D) additive printing according to the following steps:
- digitally recording a three-dimensional negative (3) of the part to be produced (1; 24d) in a control unit of a three-dimensional additive printing system in order to make a print of the counterform (20; 30, 30b) to be produced, the rest of the counterform having faces of suitable shape for a mold for manufacturing the part (1; 24d);
- producing the counterform (30a, 30b) by means of a 3D additive printing technique, the size of the counterform (20; 30a, 30b) being increased by a density stretch factor that compensates for a shrinkage in the size of the part to be manufactured (1; 24d) in the direction of the uniaxial pressure (F) applied during the sintering densification of the part to be manufactured; and
- completing the additive printing of the counterform (20; 30a, 30b) by sintering.

2. The method for producing a counterform as claimed in claim 1, wherein the 3D additive printing technique is chosen from stereolithography, binder jetting, controlled extrusion, fused filament fabrication, inkjet printing and aerosol jet printing.

3. The method for producing a counterform as claimed in either one of claims 1 and 2, wherein the counterform (20; 30a, 30b) is produced from a porous material chosen from a ceramic, a silica, a metal silicate and a composite material.

4. The method for producing a counterform as claimed in any one of the preceding claims, wherein the printing is performed with a thickness of the walls of the counterform (20; 30a, 30b) that is less than or equal to five millimeters.

5. The method for producing a counterform (20, 30a, 30b) as claimed in any one of the preceding claims, **characterized in that** a step of removing the binder from the counterform (30a, 30b) is performed at the output of the 3D additive printing by means of a heat treatment at a temperature of between 200 and 600°C and rates of temperature rise of between 0.1 and 1°C/min.

6. The production method as claimed in the preceding claim, **characterized in that** the step of binder removal is followed by a step of pre-sintering by heat-treating the counterform (3a, 30b) at a temperature of between 600 and 1500°C.

7. The method for producing a counterform as claimed in any one of the preceding claims, wherein said counterform is, in a subsequent step, divided into at least two portions (30a, 30b) that are joined along at least one joint plane (P) so as to eliminate at least one undercut, the joint plane (P) between the portions (30a, 30b) separating the complex shape into portions (30a, 30b) that can be removed from the mold directly.

8. A method for manufacturing a part of complex shape (1; 24d) by means of sintering using a counterform (20; 30a, 30b) produced by means of the method as defined in the preceding claim, **characterized in that** it is carried out according to the following steps:
- bringing the counterform portions (20, 30a, 30b) together in a densification mold for sintering under uniaxial pressure;
- introducing a pulverulent or porous material to be densified into at least one duct (4) that passes through a counterform portion (30a);
- densifying the pulverulent or porous material for sintering under uniaxial pressure (F); and
- separating the counterform portions (30a, 30b) in order to release the part (1; 24d) thus manufactured.

9. The manufacturing method as claimed in any one of the preceding claims, wherein the counterform (20; 30a, 30b) is produced from a porous material chosen so that the materials of the counterform (20; 30a, 30b) and of the part to be manufactured (1; 24d) exhibit the same behavior on sintering.

10. The manufacturing method as claimed in claim 8, wherein the sintering start temperature, or sintering end temperature, of a ceramic of the counterform (20; 30a, 30b) is higher than or equal to, or higher than, respectively, that of the part to be manufactured (1; 24d).

11. The manufacturing method as claimed in the preceding claim, wherein the ceramic is chosen from YSZ, ATZ, ZTA and alumina powder exhibiting degrees of densification that may range from 40 to 80%.

12. The manufacturing method as claimed in any one of claims 8 to 11, wherein at least one open-ended duct (4) for filling with a pulverulent or porous material intended for forming the part (1; 24d) is provided outside the counterform (20; 30a, 30b).

13. The manufacturing method as claimed in any one of claims 8 to 12, wherein the sintering of the counterform (20; 30a, 30b) is applied at the same time as the sintering of the part to be manufactured (1; 24d).

14. The manufacturing method as claimed in any one of claims 8 to 13, wherein the porous or pulverulent material of the part be manufactured (1; 24d) is chosen from a ceramic, a metal alloy, a polymer and a composite material.

15. The manufacturing method as claimed in the preceding claim, wherein at least one of the outer walls of the counterform portion (30a, 30b) is voided and then filled with ceramic powder of which the sintering temperature is equal to that of the ceramic of the counterform portion (30a, 30b).

16. The manufacturing method as claimed in any one of claims 8 to 15, wherein an interface of porous or pulverulent material (22; 42) is arranged between the counterform (20; 30a, 30b) and the material to be densified (24).

17. The manufacturing method as claimed in the preceding claim, wherein the interface (22; 42) is formed by at least one layer of material chosen from graphite, an yttrium oxide and boron nitride.

18. The manufacturing method as claimed in the preceding claim, wherein the interface layer (22; 42) is applied in a form chosen from a spray, a powder deposit and a sheet of suitable shape.
